# EUROPEAN PATENT SPECIFICATION

(11) **EP 0 602 184 B1**
(45) Date of publication and mention of the grant of the patent: **19.03.1997**
(21) Application number: 92920557.3
(22) Date of filing: 08.09.1992
(51) Int. Cl.: G21C 19/00, F22B 37/00

(54) **DEVICE FOR POSITIONING A TOOL IN AN ENCLOSURE LIMITED BY A WALL TRAVERSED BY AN OPENING**
Vorrichtung zum Positionieren eines Werkzeugesin einem von einer öffnung versehenen Wandbegrenzten Gefäss.
DISPOSITIF DE POSITIONNEMENT D'UN OUTIL DANS UNE ENCEINTE LIMITEE PAR UNE PAROI TRAVERSEE PAR UNE OUVERTURE

(30) Priority: 06.09.1991 US 755983
(43) Date of publication of application: 22.06.1994
(73) Proprietor: Framatome Technologies, Inc., Lynchburg, Virginia 24506-0935 (US)
(72) Inventor: GLASS, Samuel, W., III, Lynchburg, VA 24503 (US); KLAHN, Francis, C., Huddleston, VA 24104 (US); STEINBRUNNER, Joseph, G., Lynchburg, VA 24502 (US)
(74) Representative: Bouget, Lucien
(86) International application number: PCT/US92/07568
(87) International publication number: WO 93/05517

(56) References cited:
- US-A- 4 037 730
- US-A- 4 168 782
- US-A- 4 561 816
- US-A- 4 984 627

## Description

The invention relates to a device for positioning a tool in an enclosure and in particular in an enclosure delimited at least partially by the wall of a component of a nuclear reactor.

More particularly, the invention relates to a device for positioning a tool in the water box of a steam generator of a pressurised water nuclear reactor.

The steam generators of nuclear reactors and more particularly of pressurised water nuclear reactors are heat exchangers whose two exchange fluids are composed of water. The heat is transferred from a pressurised primary fluid to a secondary fluid. The secondary fluid is transformed into steam which is used to drive a turbine. The primary refrigerant coming from the vessel of the reactor enters the steam generator via an inlet pipe of the water box connected to the hot leg of the primary circuit. The refrigerating fluid circulates through the tubes of the bundle of the heat exchanger (from 3,000 to 15,000 tubes) which transmit heat to the secondary fluid through their walls. The primary refrigerant leaves the steam generator via an outlet compartment of the water box. The ends of the tubes of the heat exchanger pass through a tube plate of great thickness in which they are fixed. The tubes and the tube plate constitute the separation wall between the primary refrigerant and the secondary fluid. The secondary fluid circulates through the cylindrical chamber which surrounds the tubes of the bundle of the heat exchanger.

The regulations and standards which govern the nuclear industry require that the heat exchange tubes inside a steam generator should be inspected at regular intervals. Moreover, individual tubes can be repaired or taken out of service, depending on the results of the check. Access to the tubes is obtained through openings passing through the wall of the inlet compartment and of the outlet compartment of the water box of the steam generator, these openings being called manholes.

The surfaces of the compartments of the water box are contaminated by radioactive materials.

Due to the intensity of the radiation and the contamination inside the compartments of the water box, it is necessary to take safety measures with respect to the intervention of operators inside the compartments of the water box. These precautions in particular take the form of the use of protective suits and breathing apparatuses and of intervention times which are as short as possible.

Due to these requirements and the search for means allowing the exposure of staff to radiation to be limited as far as possible, the service companies in the steam generator field have been obliged to use remote manipulators in order to carry out repair and inspection operations inside steam generators.

The main result sought when a remote manipulator is used in a steam generator is to limit the exposure of staff to radiation as far as possible. This result is obtained by a remote manipulator design such that its installation in the steam generator and its extraction from the steam generator are carried out remotely and such that there is the possibility of changing the tool heads without staff having to pass through the manhole opening.

Other results which are also sought relate to the precise positioning of the tool and its alignment in the axis of each of the positions of tubes as well as the strength and rigidity of the support when various repair operations are carried out, the speed with which the tool can be put in place, the reliability and the design characteristics preventing deterioration, so as to reduce the potential damage which could be caused to the steam generator.

Various types of manipulators are known. Manipulators controlled in a hydraulic manner have certain advantages concerning the strength/weight ratio. However, the risks of leaking hydraulic fluid inside the steam generator have limited the use of such systems. The electric or pneumatic devices used can generally be classified in the following categories: maintenance spiders, devices mounted on a mast or devices mounted in the area of a manhole.

Maintenance spiders are designed to be suspended from the tube plate and to move under this tube plate. This design has the drawback of slow speeds of movement. It is, moreover, unsuitable in the case where numerous tubes have been blocked, which prevents one or more fingers from engaging in the tube plate. There are also risks of the device falling from the tube plate. Devices mounted on a mast are designed to operate from a mast interposed between the tube plate and the bowl-shaped bottom of the water box of the generator. The mast prevents access to certain tubes and must be moved to allow access to these tubes. The installation of the manipulator and changes of tool can also be difficult to carry out and can require staff to at least partially enter the generator, which increases the exposure to radiation.

The problems linked to manipulators mounted in the area of a manhole comprise in particular low strength, limited lifting capability, obstruction of the manhole, limited vertical movement and the need for operators to enter the steam generator to perform tool changes.

In order to eliminate or to limit these drawbacks, the use of remote manipulators fixed in the area of a traversing opening or manhole and which comprise a support coming to rest on the bowl-shaped bottom of the water box has been proposed.

Remote manipulators of this type have been described for example in FR-A-2,626,807, in EP-A-0,003,109 and in EP-A-0,124,824.

The remote manipulator described in FR-A-2,626,807 which comprises an articulated arm with 4 degrees of freedom is designed so that the end of the arm carrying the tool can come back out through the manhole passing through the wall of the water box, in the area of which the support of the remote manipulator is fixed.

Tool changes may thus be performed outside the water box.

The articulated arm of the remote manipulator which is connected to a floor flange via its end opposite the end carrying the tool is mounted on a support introduced into the enclosure, by the intermediary of the floor flange, so that the floor flange is in a fixed position on the support.

This leads to various difficulties in putting the remote manipulator in place inside the water box without the operators passing at least partially through the manhole.

Furthermore, the fixed position of the floor flange on the support gives rise to difficulties in designing an articulated arm which can both present the tool in all positions of tubes of the steam generator and come back out through the opening of the manhole so as to perform tool changes outside the water box.

In US-A-4.168.782 is described a remote access manipulator for performing operations in a nuclear steam generator comprising a slave carriage located in the steam generator and a master carriage located in a scale model of the steam generator and connected to the slave carriage for controlling the movement of the slave carriage in the steam generator. A slave manipulator arm is used to move the slave carriage for performing an operation in the steam generator and is controlled by a master manipulator arm moving the master carriage in the scale model. A base of the manipulator arms can be displaced on a track from an inactive position outside the steam generator (or model) to an active position in the steam generator (or model). Such a device is complex and requires that a scale model of the steam generator and a master manipulator are used. Moreover, the slave device does not comprise means for accurately positioning the manipulator arm in the steam generator so as to place a tool carried by the arm in line with an axis of a tube of the steam generator.

More generally, no device for positioning a tool in an enclosure limited by a wall passed through by an opening was known which could be put in place and operated in a simple manner and allowed tool changes without an operator having to even partially pass beyond the plane externally delimiting the opening of the wall.

The object of the invention is thus to provide a device for positioning a tool in an enclosure delimited by a wall traversed by an opening, comprising a support equipped with means for fasteening on the wall in the area of the opening and means for bearing on a bottom of the enclosure and a remote manipulator consisting of an articulated arm with 4 degres of freedom connected, at one of its ends, to a floor flange carried by the support, this device being able to be put in place in a simple manner and used so as to place a tool in any region of the enclosure, without an operator having to pass through the plane externally delimiting the opening of the wall.

To this end, the arm is rotationally monted on the floor flange, the floor flange comprises remote controlled motorising means and guiding means intended to interact with guiding means and means for driving of the support for moving the floor flange inside the enclosure between a position close to the opening and a distant position, the support further comprising means for stopping and locking the floor flange in at least one intermediary position between the position close to the opening and the distant position and a beam on which there is mounted a table carrying the means for guiding the floor flange, by the intermediary of movement means for pivoting the table on the beam about a longitudinal axis of the table.

The tool positioning device may comprise, in a preferential manner, a pivoting retractable foot fixed to the support and intended to come to rest on the bottom of the enclosure when the positioning device is put into service.

Also in a preferential manner, the tool positioning device also comprises a tool loading assembly which can be fixed in a removable manner to the support, so as to introduce the support into the enclosure.

The tool positioning device may further comprise a movement assembly which can be fixed in a removable manner to the support and which is designed to receive the floor flange of the remote manipulator arm so as to move the floor flange and the arm towards the inside of the enclosure when the support is in place in the enclosure, so as to make the floor flange and the arm come to one end of the support.

Preferably, the remote manipulator arm is an articulated arm with 4 degrees of freedom of an anthropomorphic design and used in a configuration where the elbow is in the upper position.

The manipulator arm can comprise a first section comprising the trunk and the shoulder of the arm and a second section comprising the elbow and the wrist. In order to put the arm in place inside the enclosure, the first section of the arm comprising the trunk connected to the floor flange and the shoulder may be placed on the movement assembly connected to the support and introduced, during a first period, inside the enclosure via the opening, the floor flange comprising motorising means. When the end of the trunk-shoulder section of the arm is in the area of the opening, the second section comprising the elbow and the wrist of the arm is fixed to the first section. The two assembled sections are then transported by the movement device until they reach the support. The movement assembly can then be separated from the support.

The end of the arm receiving the tool may then be moved in such a manner as to come back out through the opening of the enclosure so as to mount the tool which is necessary for performing an intervention in the enclosure.

The means of the electric or pneumatic type for motorising the positioning device are powered and controlled remotely by the intermediary of cables.

In the case where the arm comprises two sections which can be assembled and dismantled, the second section comprising the elbow and the wrist may comprise direct electrical and pneumatic coupling means so as to avoid the use of power cables for the tool.

In order to make the invention better understood, there will now be described, by way of a nonlimiting example and with reference to the appended figures, one embodiment of a positioning device according to the invention and its operation for positioning a tool.

Figure 1 is a general view showing the device according to the invention after it has been put in place in the water box of a steam generator.

Figure 2 is a plan view of a tool loading assembly of the device according to the invention.

Figure 3 is a view showing a locking pin used with the tool loading assembly and the movement assembly of the device according to the invention.

Figure 4 is a lateral view along 4-4 of Figure 5 of the movement assembly of the positioning device according to the invention.

Figure 5 is a plan view of part of the movement assembly of the device according to the invention.

Figure 6 is an end view along 6-6 of Figure 5, of the movement assembly represented in Figure 5.

Figure 7 is a lateral view of the support of the device according to the invention.

Figure 8 is a lateral view of the arm of the device according to the invention.

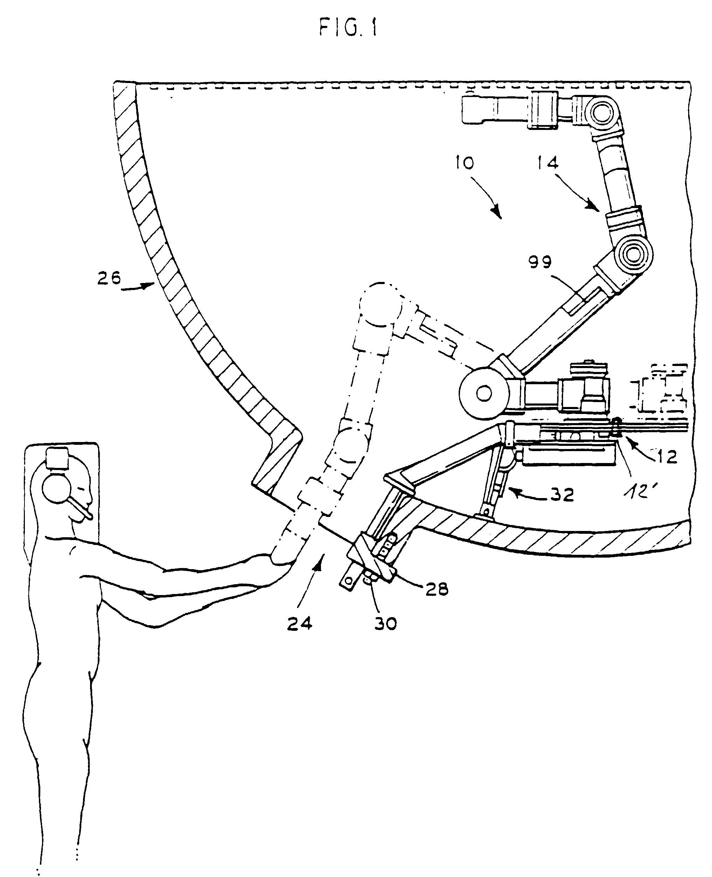

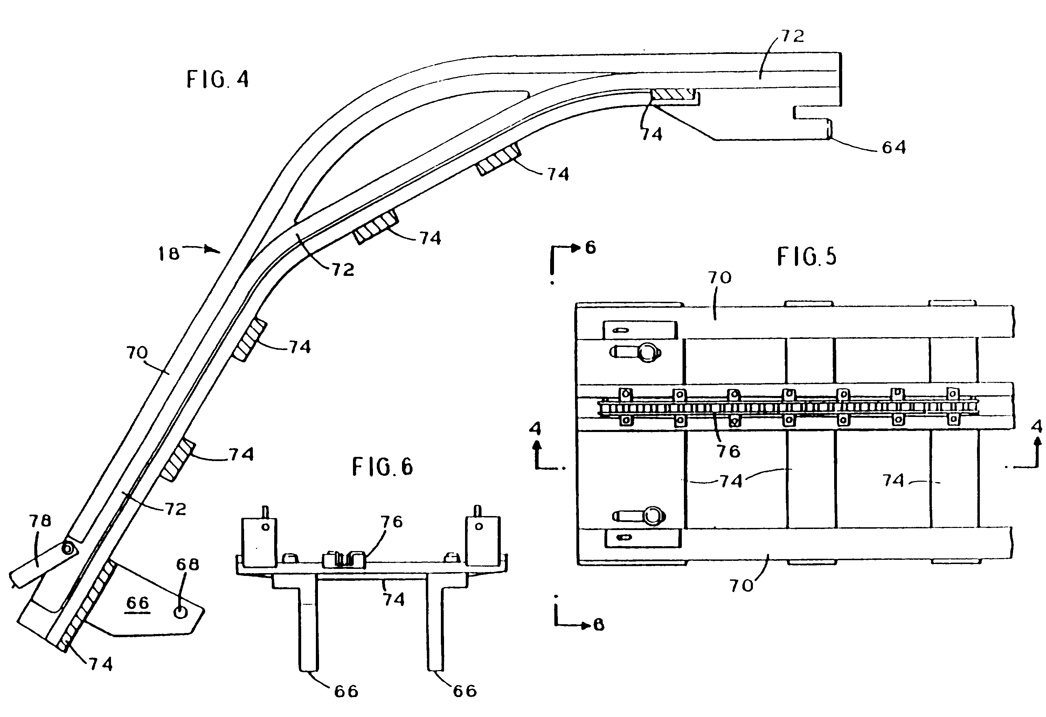

In Figure 1, the positioning device according to the invention is designated in a general manner by the reference 10. The tool positioning device 10 comprises a support 12, an arm 14, a tool-loading assembly 16 (Figure 2) and a movement assembly 18 (Figures 4 to 6).

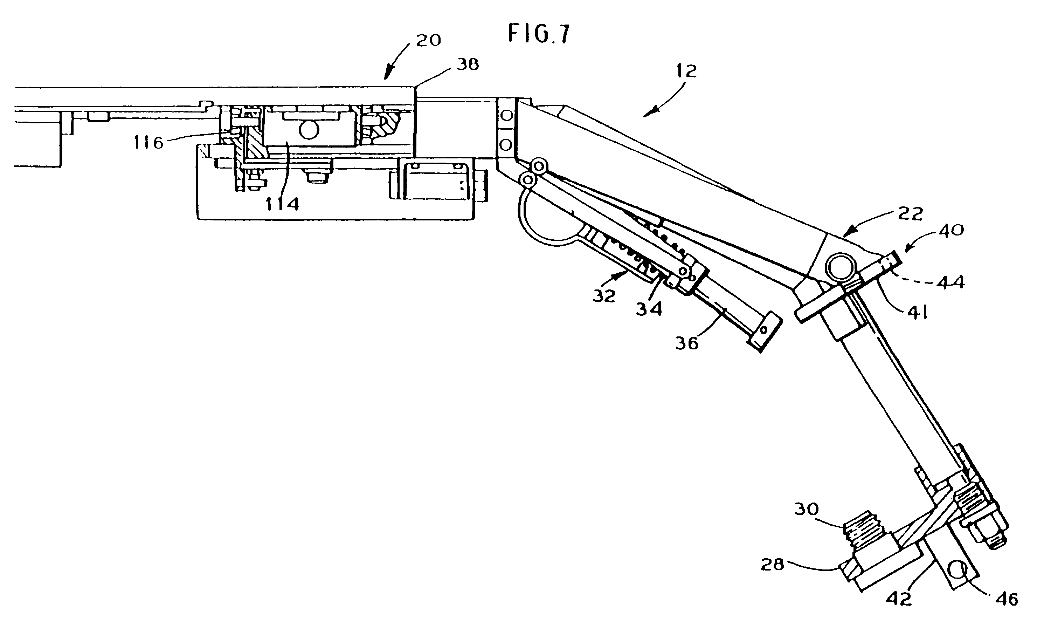

The support 12 can be seen in more detail in Figure 7. The support 12 is composed of a table 20 and a beam 22. The table 20 is connected at one of its ends to the beam 22. The beam 22 extends the table 20 downwards making an angle with the table. The median part of the beam 22 comprises a curvature, so that the lower part of the beam 22 is directed downwards with a greater angle that the upper part. The end of the lower part of the beam 22 comprises means for fixing the support 12 to the opening consisting of the manhole 24 of a steam generator 26. A plate 28 is fixed at the lower end of the beam 22 perpendicular to the beam. The plate 28 comprises an opening through which a fixing bolt 30 passes. As can be seen in Figure 1, when the support 12 is mounted on the steam generator 26, the lower part of the beam 22 comes to rest on the inner wall of the manhole 24 and the plate 28 bears against the external edge of the manhole 24. The fixing bolt 30 is screwed inside one of the tapped holes provided in the wall of the steam generator 26 and of the manhole 24 which holes are used for fixing the manhole cover, before putting the steam generator back into service for normal operation. Means for providing a bearing support complementary to the support 12 when it is inside the steam generator 26 are provided in the shape of an assembly with a retractable foot 32.

Figure 1 shows the assembly 32 in its deployed bearing position. Figure 7 shows the assembly 32 in its retracted position. A spring 34 is used to retain the assembly 32 in its retracted position during the introduction of the support 12 into the steam generator and during the extraction of the support from the steam generator. When the support 12 has been introduced into the steam generator 26, the assembly 32 is lowered using a motor which is not shown, so that the assembly is in an deployed bearing position, its lower part thus being in contact with the bottom of the water box of the steam generator 26. In the preferential embodiment described, the spring 34 is arranged in such a manner that it is in a relaxed configuration at the moment when the foot of the assembly 32 is completely deployed. Thus one single motor can be used to obtain the deployment and the retraction of the foot of the assembly 32. The leg 36 of the assembly 32 can also be made in a telescopic form to obtain relative movement with respect to the assembly 32.

As can be seen in particular in Figure 7, the assembly with a bearing foot 32 is mounted pivotably on the support 12 in the area of the junction between the table 20 and the beam 22 or in its vicinity.

The table 20 comprises a pair of lateral rails 38 on each of its sides. Each of the lateral rails 38 comprises a horizontal part which extends towards the inside in the direction of the centre of the table 20. The lateral rails 38 ensure the retention and the guiding of the manipulator arm 14, by the intermediary of its floor flange, as will be explained later.

The lateral rails 38 comprise a first end in the vicinity of the junction between the beam 22 and the table 20 intended to come into the vicinity of the opening of the manhole 24 when the support 12 is put in place in the water box of the steam generator 26 and a second end distant from the manhole opening 24 (see Figure 1).

The support 12 comprises means 12' for stopping and locking the floor flange on which the arm 14 is mounted in at least one intermediary position between the first and the second end of the rails 38 for guiding the floor flange of the arm 14.

The support 12 comprises means for fixing the tool-loading assembly 16 and the movement assembly 18 in the shape of attachment points 40 and 42.

A first attachment point is composed of a pair of cylinders mounted on each side of the table 20 and each comprising an axial opening. A second attachment point 42 is composed of a pair of flanges fixed to the plate 28, each flange comprising a traversing opening 46.

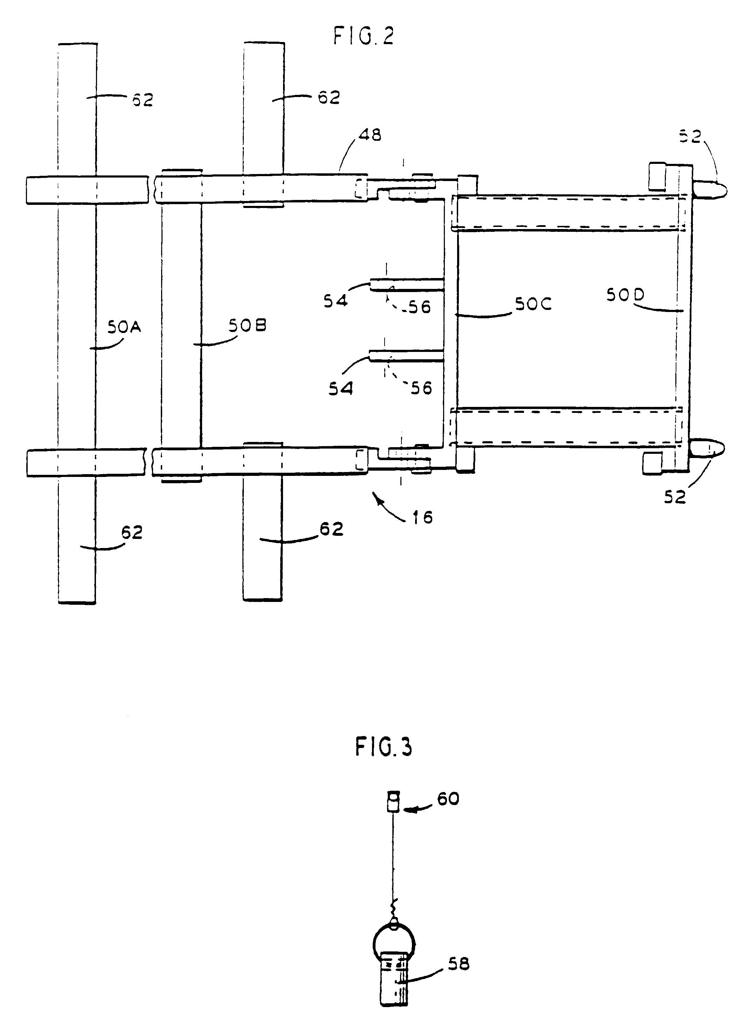

The tool-loading assembly 16 may be fixed to the support 12 in such a manner as to be able to put the support 12 in place inside the steam generator 26 without an operator having to pass even partially into the steam generator via the manhole 24. As shown in Figure 2, the tool-loading assembly is composed of a frame 48 of generally rectangular shape (according to the plan view) having supporting cross-members 50A, 50B, 50C and 50D. The supporting cross-member 50D comprises a peg 52 projecting towards the outside at each of its ends. The pegs 52 are dimensioned so as to be able to be received in axial openings 44 in the front plate 41 of the support 12 constituting an attachment point 40. The supporting cross-member 50C comprises a pair of flanges 54 extending longitudinally from the cross-member. The flanges 54 comprise openings 56 having coaxial arrangements. The openings 56 are dimensioned so as each to receive a pin such as shown in Figure 3. The pin 58 can comprise a flexible link 60 which is connected to it to facilitate its extraction from the openings 56 and to avoid a loss or separation of the tool. The openings 46 in the flanges 42 on the support 12 are also dimensioned in such a manner as to receive pins 58. The tool-loading assembly 16 is dimensioned and designed in such a manner that the openings 56 in the flanges 54 are in coaxial alignment with the openings 46 in the flanges 42 of the support 12 when the pegs 52 are introduced in the openings 44 of the front plate 41. The introduction of a pin 58 in the openings 46 and 56 thus produces the locking of the tool-loading assembly 16 on the support 12. An operator can thus use handles 62 on the tool-loading assembly 16 to introduce the support 12 through the manhole 24 into the inside of the steam generator 26 in order to place the plate 28 against the external edge of the manhole 24 and to fix the support 12 to the steam generator 26 without physically passing through the external plane of the manhole 24.

After the support 12 has been fastened to the steam generator, the flexible link 60 is used to remove the pin 58 from the openings 46 and 56. The tool-loading assembly 16 is thus separated from the support 12 and the movement assembly 18 is introduced into the steam generator 26 and fixed to the support 12 in the same manner as the tool-loading assembly 16.

The movement assembly 18 has been represented in Figures 4 to 6. The assembly 18 comprises a pair of pegs 64 and flanges 66. Each of the flanges comprises a traversing opening 68. As in the case of the tool-loading assembly 16, the movement assembly 18 is dimensioned and designed in such a manner that the pegs 64 and the flanges 66 respectively come to coincidence with the axial openings of the cylinders mounted on either side of the table 20 and the flanges 42 to produce the fixing of the movement assembly 18 to the support 12. One pin 58 is introduced through each of the sets of openings 46 and 68 to ensure the assembling of the assembly 18 and of the support 12. The movement assembly 18 has a shape such that overall it matches the upper curvature of the support 12 and comprises lateral rails 70. Each of the two lateral rails 70 comprises a groove 72 which extends along its length. These grooves ensure the retention and the guiding of the manipulator arm 14, by the intermediary of its floor flange, on the movement assembly 18 during the loading of the remote manipulator 14, as will be explained later. The lateral rails 70 are supported by a plurality of cross-members 74.

A rack 76 which is composed of a bar having a plurality of teeth along its length for interacting with a pinion is fixed on the cross-members 74 and extends along the length of the movement assembly 18. A pivoting locking mechanism 78 is provided on each of the lateral rails 70, above the flanges 66, to allow access to the grooves 72 during the loading of the arm 14 on the movement assembly 18 and to prevent the arm 14 from disengaging from the movement assembly 18 after it has started to move along the movement assembly 18.

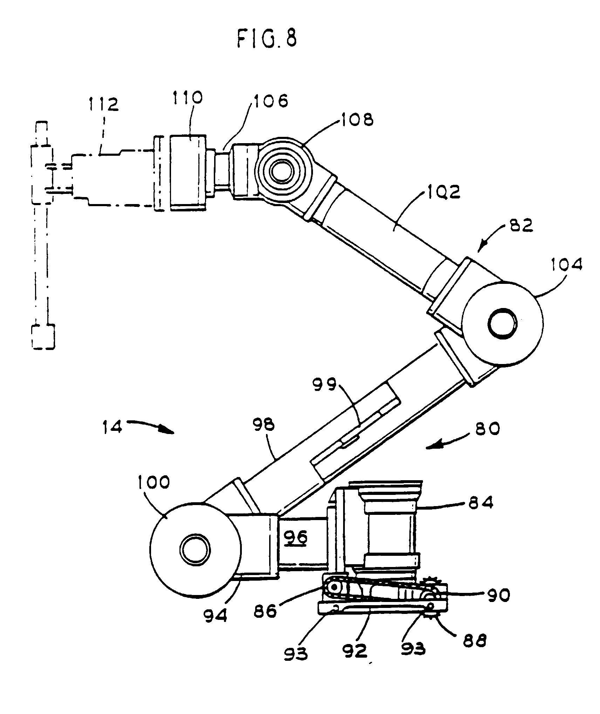

As can be seen in Figure 8, the arm 14 comprises a trunk-shoulder assembly 80 and an elbow-wrist assembly 82. The trunk 84 rests on a floor flange 92 constituting a motorised carriage comprising a motor 86 which drives a chain 90. The chain 90 passes over a toothed wheel 88 mounted so as to rotate on the floor flange 92, so that the chain 90 driven by the motor 86 can rotationally drive the toothed wheel 88. The toothed wheel 88 comprises teeth which are dimensioned so as to engage in the spaces between the teeth of the rack 76 on the movement assembly 18. The trunk 84 is rotationally mounted on the floor flange 92 and encloses a motor allowing the rotation of the trunk 84 about its axis on the floor flange. The floor flange 92 comprises guide pegs 93 (one at each corner of the floor flange which is of rectangular shape), two of these guide pegs being visible in Figure 8. Each of the guide pegs 93 is dimensioned in such a manner as to be able to be introduced with a small clearance inside a groove 72 of the movement assembly 18.

Each of the rails 38 of the table 20 of the support 12 also comprises a groove similar to the grooves 72 below its horizontal part, so as to receive the guide pegs 93 of the floor flange 92 when the floor flange 92 has reached the support 12.

Likewise, a rack similar to the rack 76 is fixed on the table 20 in a longitudinal arrangement, so as to ensure the movement of the floor flange 92 and of the arm 14 on the support 12 in its longitudinal direction between its first end near the manhole opening and its second distant end, when the support 12 is fixed inside the water box of the steam generator.

Insofar as the movement and guiding means are similar in the case of the movement assembly 18 and of the support 12, the similar means of the support 12 are not described in detail.

These means ensure the retention and guiding of the arm 14, by the intermediary of its floor flange 92, on the movement assembly 18 as on the support 12.

The arm 14 is an arm of anthropomorphic design with 4 degrees of freedom used in a configuration where the elbow is directed upwards. The first arm segment 96 is fixed on the rotary trunk 84. A second arm segment 98 is connected, in a pivoting manner, to the shoulder joint 100. The third articulated arm segment 102 is connected, in a pivoting manner, to the second articulated arm segment 98 by the elbow articulation 104.

In the preferential embodiment described, the second segment of articulated arm 98 is designed in two parts which are fixed to each other along the line 99. This mounting facilitates handling, installation of the arm 14 in, and extraction of the arm 14 from the steam generator 26. The tool segment 106 of the articulated arm is fixed in a pivoting manner to the third segment of articulated arm 102 by the wrist articulation 108. The tool segment 106 is also fixed in a rotary manner to the wrist articulation 108. The tool segment 106 comprises coupling means 110 for the tool which is fixed thereon. The coupling means 110 for the tool are designed so as to easily ensure the mounting and dismantling of a whole set of tools used for operations inside the steam generator. One of these tools has been shown in broken lines in Figure 8.

There will now be described, with reference to the set of figures, an operation for putting in place and mounting the positioning device inside the water box of a steam generator 26 and for positioning a tool inside the water box.

In order to perform such an operation, the tool-loading assembly 16 is fixed to the support 12 by introducing the pegs 52 into the openings 44, by aligning the openings 46 and 56 with each other and by introducing a pin 58 through each of the openings 46 and 56 each in alignment with the other. The operator can then use the handles 62 of the tool-loading assembly 16 to introduce the support 12 through the manhole 24 into the steam generator 26, without him needing to enter the steam generator 26 even partially. The plate 28 is set to bear against the outer surface of the manhole 24 as shown in Figure 1 and a fixing bolt 30 is screwed inside a tapped hole normally used for fixing a manhole closure cover. The retractable bearing assembly 32 is swung downwards so as to come into contact with the lower bottom of the water box of the steam generator 26 to avoid curvature or bending in the support 12. It is to be noted that all the operations which are described in this part of the description are obtained by motor means which are actuated and controlled remotely by remote control cables which have not been represented and which are fixed at one of their ends to power supply means and to control devices and at their opposite end to the tool-positioning device 10. Thus in particular the actuation and control of the bearing foot 32, of the drive motor 86 for the floor flange 92 constituting a carriage for moving the arm and electrical and pneumatic means for actuating the various segments of the articulated arm 14 which constitutes a remote manipulator are produced.

The tool-positioning device 10 comprises a set of electric motors and pneumatic motors intended to ensure the movement of these various parts.

The pins 58 are removed and the tool-loading assembly 16 is separated from the support 12 so as to be entirely extracted from the steam generator 26. The movement assembly 18 is then introduced into the steam generator 26 and fixed to the support 12 in the same manner as the tool-loading assembly 16, that is to say as described above. The locking mechanisms 78 on each of the lateral rails 70 are moved upwards by pivoting to give access to the grooves 72 in the lateral rails 70. The floor flange 92 carrying the trunk part 84 of the arm 14 is loaded onto the movement assembly 18, so that the guide pegs 93 are engaged in the grooves 72. The locking mechanisms 70 are then moved by pivoting downwards and locked in this position to prevent the floor flange from disengaging with respect to the movement assembly 18. When the floor flange 92 is in position on the movement assembly 18, the toothed wheel 88 is aligned and in contact with the rack 76 so that the teeth of the wheel 88 are engaged in the teeth of the rack 76. The motor 86 for moving the floor flange 92 is remotely actuated, so as to drive the chain 90 and to set the toothed wheel 88 in rotation. The toothed wheel 88 thus drives the floor flange 92 and the trunk part 84 of the arm in the longitudinal direction and towards the top of the movement assembly 18 in such a manner that they penetrate inside the steam generator 26. During this movement, the position of the central part of the second segment 98 of the articulated arm is adjusted in such a manner as to place it and hold it in the opening of the manhole 24. The floor flange 92 is stopped in its movement on the assembly 18 whilst part of the second segment 98 of the arm projects through the opening of the manhole 24. The rest of the arm 14 is mounted by fixing the second part of the second segment 98 of the articulated arm along the line 99. By controlling the rotation of the toothed wheel 88, the arm 14 is driven over the rest of its travel, up to the terminal end of the movement assembly 18 constituting its junction part with the support 12. The table 20 of the support 12 comprises a rack in its longitudinal direction and in a central position and grooves in its lateral rails 38 which are similar to the rack 76 and the grooves 72 of the movement assembly 18. Furthermore, when the movement assembly 18 is connected to the support 12, the rack and the grooves of the rails of the support 12 are in alignment with the rack 76 and the grooves 72 respectively.

When the floor flange 92 upon which the articulated arm 14 rests arrives at the end of the movement assembly 18, the floor flange 92 passes from the movement assembly 18 to the table 20 of the support 12. When the floor flange 92 has reached the end of the table 20 of the support 12 (position of the trunk 84 and of the floor flange 92 represented in broken lines), the floor flange 92 is stopped and fixed in position, using a stopping and blocking device carried by the table 20.

The movement assembly 18 is dismantled after the floor flange 92 and the arm 14 have reached the end of the table 20.

As shown in broken lines in Figure 1, the articulated arm 14 is then placed so as to allow the operator to fix a tool to the tool coupling means 110 without having to enter the steam generator 26.

As shown in solid lines in Figure 1, the floor flange 92 and the trunk 84 are next moved and then fixed in position by a stopping and blocking device 12'; the arm 14 is then put in position inside the water box of the steam generator to perform the required work on one of the tubes or on the tube plate of the steam generator 26.

In a general manner, the position of the floor flange 92 carrying the articulated arm 14 can be adjusted as a function of the intervention zone of the tool under the tube plate of the steam generator.

The operations for putting the remote manipulator arm in place in the water box of the steam generator and the interventions under the tube plate of the steam generator in any location are thus greatly facilitated by the fact that the floor flange 92 and the articulated arm 14 can move on the support 12.

The table 20 of the support 12 can comprise several stopping and blocking mechanisms for the floor flange 92 in predetermined positions or else remotely controlled means allowing the floor flange 92 to be stopped and fixed in position on the support 12 at any place.

Insofar as it is extremely important that the tools used for interventions under the tube plate of the steam generator make a perfectly determined angle so as to be able to have access to the inside of the tube, these tools generally having to be placed in a perfectly vertical direction, the table 20 comprises means allowing it to be made to pivot about its longitudinal axis. These means may comprise a motor 114 and a pinion 116 driven by the motor 114, as can be seen in Figure 7. These means may also be used to carry out a tipping of the table 20 between a horizontal use position and a vertical position allowing free access to the inside of the steam generator via the manhole.

The table 20 may be equipped with inclination indicators which are used to adjust the position of the table 20 by using the bearing assembly 32 as well as the motor 114 and the pinion 116.

The tool segment 106 of the articulated arm may also be equipped with an inclination indicator constituting an additional means for determining and adjusting the position and the direction of the tool 112.

After the intervention inside the steam generator has been finished, the tool-positioning device 10 may be dismantled by operations which are the reverse of those which have been described above.

The device according to the invention makes it possible to rapidly and simply put the remote manipulator arm of the positioning device according to the invention in place inside an enclosure such as a water box of a steam generator, so as to carry out an operation at any location in the water box of the steam generator, with an appropriate tool.

All the operations for putting the positioning device and the tool in place in the enclosure and all the operations for changing the tool can be carried out without an operator having to enter the steam generator.

The invention is not limited to the embodiment which has been described by way of a non-limiting example.

Thus the movement means and the means for locking the floor flange of the remote manipulator arm in position may be produced in a different form from those which have been described.

The positioning device according to the invention may be used not only for carrying out interventions inside the water box of a steam generator of a pressurised water nuclear reactor but also in any enclosure of a component of a nuclear reactor comprising an opening or even in any enclosure constituted in order to carry out an operation on an element or component of a nuclear reactor in a totally isolated zone.

## Claims

1. Device for positioning a tool in an enclosure (26) limited by a wall traversed by an opening (24), comprising a support (12) equipped with means (28, 30) for fastening on the wall in the area of the opening (24) and means (32) for bearing on a bottom of the enclosure (26) and a remote manipulator (14) consisting of an articulated arm with 4 degrees of freedom connected at one of its ends to a floor flange (92) carried by the support (12), characterized in that the arm is rotationally mounted on the floor flange (92), the floor flange (92) comprises remote controlled motorising means (86, 88) and guiding means (93) intended to interact with guiding means (38) and means for driving of the support (12) for moving the floor flange (92) inside the enclosure (26) between a position close to the opening (24) and a distant position, the support (12) further comprising means (12') for stopping and locking the floor flange in at least one intermediary position between the position close to the opening (24) and the distant position and a beam (22) on which there is mounted a table (20) carrying the means (38) for guiding the floor flange (92), by the intermediary of adjusting means (114, 116) for pivoting the table (20) on the beam (22) about a longitudinal axis of the table (20).

2. Device according to claim 1, characterised in that the means for guiding the floor flange (92) are composed of a set of pegs (93) each intended to move in a groove of a rail (38) securely fastened to the support (12) and in that the means for motorising the floor flange (92) are composed of a toothed wheel (88) rotationally driven by a motor (86) carried by the floor flange (92) and intended to interact with a rack securely fastened to the support (12).

3. Device according to either of claims 1 and 2, characterised in that the bearing means of the support (12) on the bottom of the enclosure (26) are composed of a foot (32) pivotably mounted on the support (12) between a retracted position and a position for bearing on the bottom of the steam generator and associated with remote controlled motor means and with return means (34) for its movement between its retracted position and its position for bearing on the bottom of the enclosure (26).

4. Device according to any one of claims 1, 2 and 3, characterised in that it further comprises a movement assembly (18) comprising guiding means (70, 72) and driving means (76) intended to interact with guiding means (93) and driving means (86, 88) of the floor flange (92), the movement assembly (18) further comprising removable means (74, 66) for linking to the support (12), so that, in an assembled position, the support (12) and the movement assembly (18) has guiding devices (70, 72) and driving devices (74) which are aligned to provide a movement of the floor flange (92) carrying the articulated arm (14) into a position on the support (12) inside the enclosure (26), from outside the enclosure (26), by the intermediary of the movement assembly (18).

5. Device according to claim 4, characterised in that the means (70, 72) for guiding the movement assembly (18) are composed of two lateral rails comprising grooves (72) and by a rack (76) arranged between the lateral rails (70).

6. Device according to any one of claims 1 to 5, characterised in that it further comprises a tool-loading assembly (16) comprising removable means (52, 54) for linking to the support (12) and handling handles (62) for manually putting the support (12) in place inside the enclosure (26) without an operator passing through the plane of the opening (24) of the enclosure (26) whilst putting the support (12) in place in the enclosure (26).

7. Device according to claims 1 to 6, characterised in that the table (20) is equipped with at least one inclination indicator for adjusting the inclination of the table (20), during actuation of the adjusting means (114, 116) and bearing means (32).

8. Device according to any one of claims 1 to 7, characterised in that the articulated arm (14) comprises a tool-support end segment (106) equipped with an inclination indicator for adjusting the inclination of the tool (112) .

## Patentansprüche

1. Vorrichtung zum Positionieren eines Werkzeugs in einem Behälter (26), der durch eine Wand mit Öffnung (24) begrenzt ist, mit einem Träger (12), der mit einer Einrichtung (28, 30) für seine Befestigung an der Wand im Bereich der Öffnung (24) sowie mit einer Einrichtung (32) für seine Abstützung auf einem Boden des Behälters (26) ausgerüstet ist, und einem Fernmanipulator (14), der einen ferngelenkten Arm mit vier Freiheitsgraden aufweist und mit einem seiner Enden mit einem Bodenflansch (92) verbunden ist, der vom Träger (12) getragen wird, dadurch gekennzeichnet, daß der Arm am Bodenflansch (92) drehbar angebracht ist, der Bodenflansch (92) eine ferngesteuerte Antriebseinrichtung (86, 88) und eine Führungseinrichtung (93) aufweist, die mit einer Führungseinrichtung (38) und mit einer Einrichtung zum Antreiben des Trägers (12) in Wechselwirkung treten sollen, um den Bodenflansch (92) im Behälter (26) zwischen einer Position in der Nähe der Öffnung (24) und einer entfernten Position zu bewegen, wobei der Träger (12) ferner eine Einrichtung (12') zum Anhalten und Verriegeln des Bodenflansches an wenigstens einer Zwischenposition zwischen der Position in der Nähe der Öffnung (24) und der entfernten Position und einen Ausleger (22) aufweist, an dem ein Tisch (20) angebracht ist, der die Einrichtung (38) zum Führen des Bodenflansches (92) über eine Einstelleinrichtung (114, 116) zum Schwenken des Tisches (20) am Ausleger (22) um eine Längsachse des Tisches (20) trägt.

2. Vorrichtung nach Anspruch 1, dadurch gekennzeichnet, daß die Einrichtung zum Führen des Bodenflansches (92) aus einer Gruppe von Zapfen (93) gebildet ist, die sich in einer Rille einer Schiene (98) bewegen sollen, die am Träger (12) befestigt ist, und daß die Einrichtung zum Antreiben des Bodenflansches (92) aus einem Zahnrad (88) gebildet ist, das durch einen Motor (86), der vom Bodenflansch (92) getragen wird, zu Drehungen angetrieben wird und mit einer am Träger (12) befestigten Stange in Wechselwirkung treten soll.

3. Vorrichtung nach Anspruch 1 oder 2, dadurch gekennzeichnet, daß die Abstützeinrichtung des Trägers (12) am Boden des Behälters (26) aus einem Fuß (32) gebildet ist, der am Träger (12) so angebracht ist, daß er zwischen einer eingeklappten Position und einer Position zum Abstützen am Boden des Dampfgenerators schwenkbar ist, und dem eine ferngesteuerte Motoreinrichtung und eine Rückstelleinrichtung (34) zugeordnet sind, die seiner Bewegung zwischen seiner eingeklappten Position und seiner Position zum Abstützen am Boden des Behälters (26) dienen.

4. Vorrichtung nach irgendeinem der Ansprüche 1, 2 und 3, dadurch gekennzeichnet, daß sie ferner eine Bewegungsbaueinheit (18) umfaßt, die eine Führungseinrichtung (70, 72) und eine Antriebseinrichtung (76) enthält, die mit einer Führungseinrichtung (93) und einer Antriebseinrichtung (86, 88) des Bodenflansches (92) in Wechselwirkung treten sollen, wobei die Bewegungsbaueinheit (18) ferner eine ablösbare Einrichtung (74, 66) für ihre Verbindung mit dem Träger (12) umfaßt, so daß die Führungseinrichtungen (70, 72) und Antriebseinrichtungen (74) des Träger (12) und der Bewegungsbaueinheit (18) aufeinander ausgerichtet angeordnet sind, um eine Bewegung des Bodenflansches (92), der den angelenkten Arm (14) trägt, von außerhalb des Behälters (26) über die Bewegungsbaueinheit (18) in eine Position auf dem Träger (12) innerhalb des Behälters (26) zu erzeugen.

5. Vorrichtung nach Anspruch 4, dadurch gekennzeichnet, daß die Einrichtung (70, 72) zum Führen der Bewegungsbaueinheit (18) aus zwei seitlichen Schienen mit Rillen (72) sowie aus einer Zahnstange (76), die zwischen den seitlichen Rillen (70) angeordnet ist, aufgebaut ist.

6. Vorrichtung nach irgendeinem der Ansprüche 1 bis 5, dadurch gekennzeichnet, daß sie ferner eine Werkzeugladebaueinheit (16) enthält, die eine ablösbare Einrichtung (52, 54) für die Verbindung mit dem Träger (12) und Bedienungsgriffe (62) für die manuelle Anordnung des Trägers (12) im Behälter (26) aufweist, ohne daß sich eine Bedienungsperson durch die Ebene der Öffnung (24) des Behälters (26) bewegen muß, während der Träger (12) im Behälter (26) angeordnet wird.

7. Vorrichtung nach den Ansprüchen 1 bis 6, dadurch gekennzeichnet, daß der Tisch (20) mit wenigstens einer Neigungsanzeige zum Einstellen der Neigung des Tisches (20) während der Betätigung der Einstelleinrichtung (114, 116) und der Abstützeinrichtung (32) ausgerüstet ist.

8. Vorrichtung nach irgendeinem der Ansprüche 1 bis 7, dadurch gekennzeichnet, daß der angelenkte Arm (14) ein Werkzeugunterstützungsende-Segment (106) aufweist, das mit einer Neigungsanzeige ausgerüstet ist, um die Neigung des Werkzeugs (112) einzustellen.

## Revendications

1. Appareil de positionnement d'un outil dans une enceinte (26) délimitée par une paroi traversée par une ouverture (24), comprenant un support (12) équipé d'un dispositif (28, 30) de fixation sur la paroi dans la région de l'ouverture (24), et un dispositif (32) destiné à être en appui sur un fond de l'enceinte (26), et un manipulateur à distance (14) constitué d'un bras articulé ayant quatre degrés de liberté, raccordé à l'une de ses extrémités à une platine de support (92) portée par le support (12), caractérisé en ce que le bras est monté rotatif sur la platine de support (92), cette platine (92) comprenant un dispositif de motorisation (86, 88) commandé à distance et un dispositif de guidage (93) destiné à interagir avec un dispositif (38) de guidage et un dispositif d'entraînement du support (12) pour le déplacement de la platine de support (92) à l'intérieur de l'enceinte (26) entre une position proche de l'ouverture (24) et une position distante, le support (12) comportant en outre un dispositif (12') d'arrêt et de blocage de la platine de support dans une position intermédiaire au moins entre la position proche de l'ouverture (24) et la position distante, et une poutre (22) sur laquelle est montée une table (20) qui porte le dispositif (38) de guidage de la platine de support (92), par l'intermédiaire d'un dispositif d'ajustement (114, 116) destiné à provoquer le pivotement de la table (20) sur la poutre (22) autour d'un axe longitudinal de la table (20).

2. Appareil selon la revendication 1, caractérisé en ce que le dispositif de guidage de la platine de support (92) est composé d'un ensemble de prions (93) destinés chacune à se déplacer dans une gorge d'un rail (38) fixé à demeure au support (12), et en ce que le dispositif de motorisation de la platine de support (92) est composée d'une roue dentée (88) entraînée en rotation par un moteur (86) porté par la platine de support (92) et destiné à interagir avec une crémaillère fixée au support (12).

3. Appareil selon l'une des revendications 1 et 2, caractérisé en ce que le dispositif d'appui du support (12) à la partie inférieure de l'enceinte (26) est composé d'un pied (32) monté pivotant sur le support (12) entre une position rétractée et une position d'appui sur le fond du générateur de vapeur et associé à un dispositif motorisé commandé à distance et à un dispositif de rappel (34) pour son déplacement entre sa position rétractée et sa position d'appui sur le fond de l'enceinte (26).

4. Appareil selon l'une des revendications 1, 2 et 3, caractérisé en ce qu'il comporte en outre un ensemble (18) de déplacement comprenant un dispositif de guidage (70, 72) et un dispositif d'entraînement (76) destinés à interagir avec un dispositif de guidage (93) et le dispositif d'entraînement (86, 88) de la platine de support (92), l'ensemble de déplacement (18) comportant en outre des moyens amovibles (74, 66) destiné à être relié au support (12) afin que, en position assemblée, le support (12) et l'ensemble (18) de déplacement présentent des dispositifs de guidage (70, 72) et des dispositifs d'entraînement (74) qui sont alignés pour assurer le déplacement de la platine de support (92) portant le bras articulé (14) jusqu'à une position sur le support (12) à l'intérieur de l'enceinte (26), depuis l'extérieur de l'enceinte (26), par l'intermédiaire de l'ensemble de déplacement (18).

5. Appareil selon la revendication 4, caractérisé en ce que le dispositif (70, 72) de guidage de l'ensemble (18) de déplacement est composé de deux rails latéraux comprenant des gorges (72) et d'une crémaillère (76) placée entre les rails latéraux (70).

6. Appareil selon l'une quelconque des revendications 1 à 5, caractérisé en ce qu'il comporte en outre un ensemble (16) de chargement d'outil qui comporte un dispositif amovible (52, 54) destiné à être lié au support (12), et des poignées (62) de manutention destinées à la mise en place manuelle du support (12) à l'intérieur de l'enceinte (26) sans qu'un opérateur passe par le plan de l'ouverture (24) de l'enceinte (26) pendant la mise du support (12) en place dans l'enceinte (26).

7. Appareil selon les revendications 1 à 6, caractérisé en ce que la table (20) est équipée d'au moins un indicateur d'inclinaison destiné à ajuster l'inclinaison de la table (20) pendant la manoeuvre du dispositif d'ajustement (114, 116) et du dispositif d'appui (32).

8. Appareil selon l'une quelconque des revendications 1 à 7, caractérisé en ce que le bras articulé (14) possède un segment (106) d'extrémité de support d'outil équipé d'un indicateur d'inclinaison destiné à ajuster l'inclinaison de l'outil (112).
